# EUROPÄISCHE PATENTSCHRIFT

(11) **EP 2 323 793 B1**
(45) Veröffentlichungstag und Bekanntmachung des Hinweises auf die Patenterteilung: **19.09.2012**
(21) Anmeldenummer: 09776789.1
(22) Anmeldetag: 19.06.2009
(51) Int. Cl.: B23C 5/22, B23C 5/20

(54) **Wendeschneidplatte**
Cutting insert
Plaquette de coupe amovible

(30) Priorität: 14.08.2008 DE 102008037915
(43) Veröffentlichungstag der Anmeldung: 25.05.2011
(73) Patentinhaber: Kennametal Inc., Latrobe, PA 15650-0231 (US)
(72) Erfinder: EBERT, Günter, 91586 Lichtenau/Ansbach (DE); KRETSCHMER, Armin, 91126 Schwabach (DE)
(74) Vertreter: FDST Patentanwälte
(86) Internationale Anmeldenummer: PCT/EP2009/004450
(87) Internationale Veröffentlichungsnummer: WO 2010/017859

(56) Entgegenhaltungen:
- EP-A1- 1 535 681
- DE-A1-102006 011 581
- US-A- 3 629 919
- US-A- 5 046 899
- US-A1- 2007 071 559
- US-A1- 2007 245 535

## Beschreibung

### Hintergrund der Erfindung

Die vorliegende Erfindung betrifft einen Plattensitz mit einer Wendeschneidplatte mit den Merkmalen des Oberbegriffs des Anspruchs 1. Die Erfindung betrifft weiterhin ein Zerspanungswerkzeug mit Plattensitz und Wendeschneidplatte.

Ein derartiger Plattensitz mit darin angeordneter Wendeschneidplatte ist beispielsweise zu entnehmen aus der WO 2007/104275.

Wendeschneidplatten können einseitig oder doppelseitig ausgestaltet sein. Bei einer einseitigen Wendeschneidplatte, wie sie beispielsweise aus der WO 2007/127109 A1 bekannt ist, ist eine Hauptfläche der Wendeschneidplatte als Arbeitsfläche ausgestaltet. Die Arbeitsfläche weist an ihrem Rand mehrere Schneidkanten auf. Ist die wirksame Schneidkante nach einer vorgegebenen Anzahl von Bearbeitungsgängen abgearbeitet, wird die Schneidplatte im Plattensitz verdreht, so dass die nächstfolgende Schneide zum Einsatz kommt. Derartige Wendeschneidplatten können beispielsweise dreieckig, quadratisch oder sechseckig ausgestaltet sein und weisen dann entsprechend drei, vier oder sechs Schneiden auf, die nacheinander zum Einsatz kommen.

Als weitere Ausführung sind doppelseitige Wendeschneidplatten bekannt, beispielsweise aus der WO 2007/037733 A1. Bei diesen Wendeschneidplatten sind beide Plattenflächen als Arbeitsflächen ausgebildet und weisen an ihren Rändern jeweils Schneidkanten auf. Während der Bearbeitung bildet zunächst die eine Arbeitsfläche die aktive Bearbeitungsfläche, während die dieser Bearbeitungsfläche abgewandte Fläche inaktiv ist und auf der Auflagefläche des Plattensitzes ruht. Zunächst werden bei diesen Wendeschneidplatten die Schneidkanten der aktiven Bearbeitungsfläche nacheinander wie bei einer einseitigen Wendeschneidplatte abgearbeitet. Sind die Schneiden der aktiven Bearbeitungsfläche abgearbeitet, wird die Wendeschneidplatte um 180° im Plattensitz verdreht, so dass die abgearbeitete Bearbeitungsfläche auf der Auflagefläche aufliegt und die vorher auf der Auflagefläche aufliegende Inaktivfläche zur aktiven Bearbeitungsfläche wird. Auch von dieser aktiven Bearbeitungsfläche werden die Schneidkanten nacheinander abgearbeitet.

Aus der WO 2007/104275 A1 ist schließlich eine weitere doppelseitige Wendeschneidplatte bekannt. Diese Schneidplatte weist einen sich an die Schneidkante anschließenden Schneidenrand mit positivem Spanwinkel auf. An den Schneidenrand schließt sich eine um die zentrale Durchgangsbohrung kegelförmig erstreckende abfallende Fläche an. Der Vorteil dieser Wendeschneidplatte liegt darin, dass durch den kegelförmig ausgestalteten Bereich Ungenauigkeiten beim Anziehen des Befestigungsbolzens ausgeglichen werden.

### Technisches Problem und Aufgabenstellung

Bei derartigen doppelseitigen Wendeschneidplatten besteht das Problem, den Plattensitz so auszugestalten, dass die Wendeschneidplatte sicher und fest im Plattensitz einliegt und dort sicher gespannt werden kann, ohne jedoch die der Auflagefläche zugewandten Schneidkanten bzw. schneidnahen Bereiche der inaktiven, der Auflagefläche des Plattensitzes zugewandten Arbeitsfläche der Wendeschneidplatte zu beschädigen. Vor allem ist es wünschenswert, hinsichtlich der Ausgestaltung der Geometrie der Schneidkanten und der Spanstufen möglichst frei zu sein.

Der vorliegenden Erfindung liegt deshalb die Aufgabe zugrunde, einen Plattensitz mit zugehöriger Wendeschneidplatte zu gestalten, wobei die Wendeschneidplatte zum einen im Plattensitz gut und maßgenau positioniert und gespannt werden kann und deren Schneidengeometrie und deren schneidennahe Bereiche zum anderen möglichst frei und an den jeweiligen Anwendungsfall angepasst gestaltet werden können.

### Lösung der Aufgabe

Diese Aufgabe ist durch die Merkmalskombination des Anspruchs 1 gelöst. Anspruch 11 ist auf ein entsprechendes Zerspanungswerkzeug als Ganzes gerichtet. Die rückbezogenen Ansprüche beinhalten teilweise vorteilhafte und teilweise für sich selbst erfinderische Weiterbildungen der Erfindung.

Die erfindungsmäßige Wendeschneidplatte weist zunächst einen umlaufenden Schneidenrand auf. Am Schneidenrand ist eine Schneidkante ausgebildet. Der Schneidenrand kann darüber hinaus Spanbrecher, Spanstufen oder ähnliche Zerspanungshilfen tragen.

Innerhalb des umlaufenden Schneidenrands ist eine Ausmuldung vorgesehen. Diese Ausmuldung ist mit einer der Anzahl der unterschiedlichen Schneidstellungen einer Arbeitsfläche entsprechenden Anzahl segmentartiger Formkörper versehen. Schließlich ist die Arbeitsfläche von einer Durchgangsbohrung durchbrochen. In die Durchgangsbohrung ist ein Befestigungsbolzen, vorzugsweise eine Befestigungsschraube einbringbar, mit welcher die Wendeschneidplatte am Werkzeug im Plattensitz fixiert und gespannt werden kann. Die erfindungsmäßige Wendeschneidplatte weist zwei einander abgewandte Arbeitsflächen der eingangs geschilderten Art auf den Hauptflächen ihres Grundkörpers auf.

Die Formkörper können zum einen als Hohlkörper, also als Aussparungen, und zum anderen als Volumenkörper, also als Vorsprünge, ausgebildet sein. Sie bilden so ein negatives bzw. positives Relief. Am Plattensitz sind entsprechende zu den Formkörpern zumindest teilweise komplementär ausgebildete Formkörperaufnahmen vorgesehen. Es ist beispielsweise möglich, die Formkörper als prismatische Vorsprünge auszugestalten. Es genügt dann am Plattensitz entsprechende Wandungen vorzusehen, an welchen Seitenwände der prismatischen Vorsprünge anliegen, um die Wendeschneidplatte in ihrer jeweiligen Schneidposition sicher zu positionieren. Die Formkörper dienen also allein dem Zweck der Positionierung und als Auflagefläche der Wendeschneidplatte, so dass die Gestaltung der eigentlichen Schneiden völlig unabhängig von diesen Positionierhilfen erfolgen kann.

Vorteilhaft ist es, die Formkörper jeweils gleich auszugestalt en und sie nach Art eines Reliefkranzes auf der Oberfläche der Ausmuldung anzubringen. Auf diese Weise bilden die nebeneinander angeordneten Formkörper ein stimradähnliches Gebilde, welches eine konstante Teilung aufweist. Bringt man den benachbarten Formkörper eines mit der Formkörperaufnahme in Eingriff stehenden Formkörpers mit der Formkörperaufnahme in Eingriff, wird die Wendeschneidplatte gewissermaßen einen Teilungsschritt weitergeschaltet und damit die nächstfolgende Schneide aktiviert.

Mit der Erfindung ist es - wie bereits ausgeführt - möglich, Spanstufen, Spanbrecher oder ähnliche Zerspanungshilfen im Bereich des Schneidenrandes vorzusehen. Als Zerspanungshilfe kann beispielsweise ein Kranz aus einem CBN- oder PKD-Schneidstoff aufgelötet oder aufgeklebt sein. Besonders vorteilhaft ist die Möglichkeit, die Wendeschneidplatte auch mit zwei unterschiedlich konfigurierten Arbeitsflächen zu versehen, so dass verschiedene Zerspanungsaufgaben oder beispielsweise eine Grob- und eine anschließende Feinbearbeitung mit derselben Wendeschneidplatte realisierbar sind.

### Beschreibung der Figuren

Anhand des in den Figuren dargestellten Ausführungsbeispiels wird die Erfindung mit weiteren Einzelheiten erläutert. Es zeigen:
- Fig. 1: die Draufsicht auf eine Arbeitsfläche einer erfindungsmäßigen Wendeschneidplatte,
- Fig. 2: die perspektivische Ansicht der in Fig. 1 gezeigten Wendeschneidplatte,
- Fig. 3: eine Schnittansicht durch den Umfang der in Fig. 1 gezeigten Wendeschneidplatte,

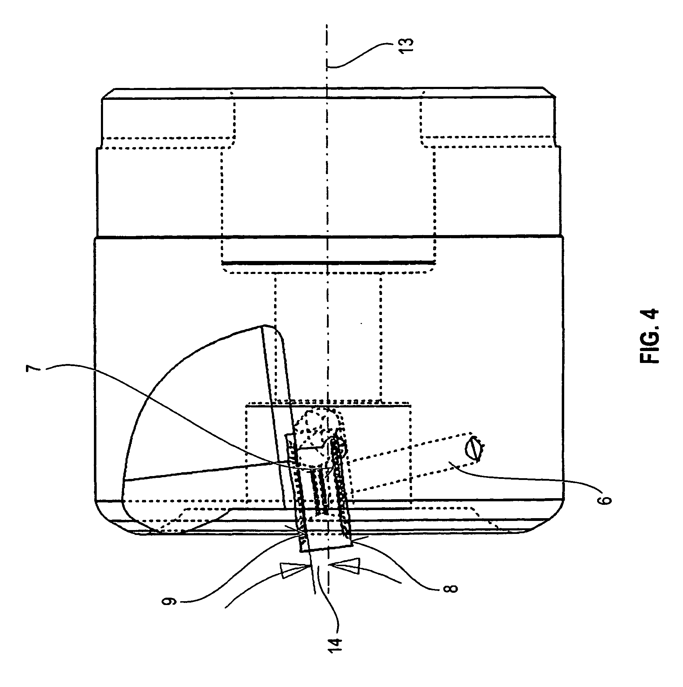

- Fig. 4: eine Ansicht des Plattensitzes,

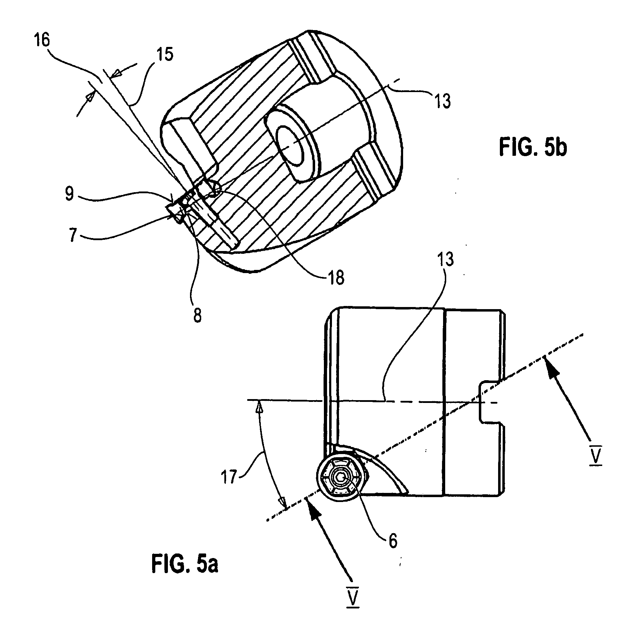

- Fig. 5a: eine im Plattensitz einliegende Wendeschneidplatte,
- Fig. 5b: den Schnitt V-V in Fig. 5a,
- Fig. 6a: eine in einem Plattensitz einliegende Wendeschneidplatte,
- Fig. 6b: den Schnitt VI-VI aus Fig. 6a,
- Fig. 7a: eine im Plattensitz einliegende Wendeschneidplatte,
- Fig. 7b: den in Fig. 7a gezeigten Schnitt VII-VII,
- Fig. 8: eine Schnittdarstellung einer ersten Ausführungsform einer im Plattensitz einliegenden Wendeschneidplatte,
- Fig. 9: eine Schnittdarstellung einer zweiten Ausführungsform einer im Plattensitz einliegenden Wendeschneidplatte.

### Beschreibung des Ausführungsbeispiels

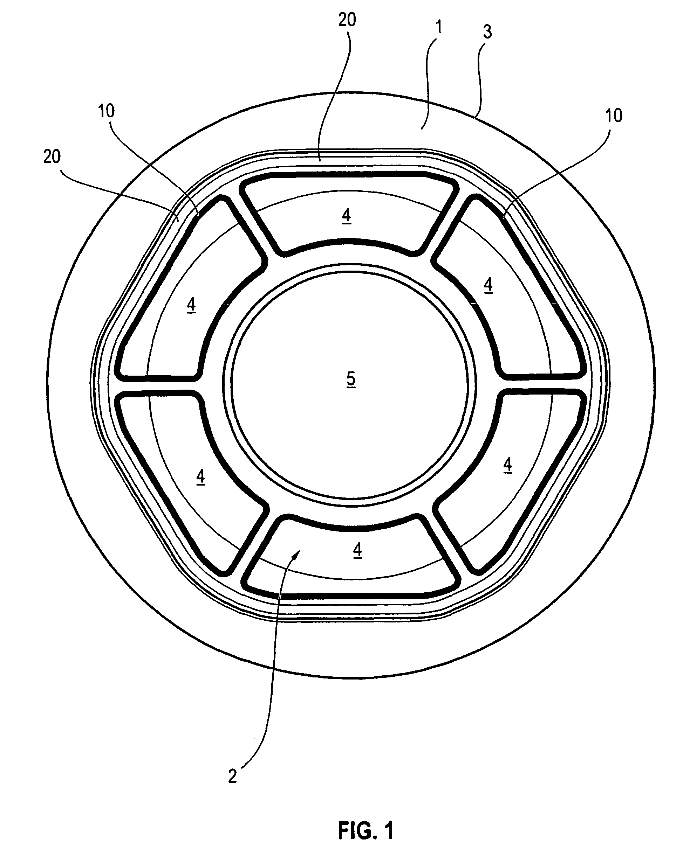

Die in Fig. 1 stark vergrößert dargestellte Wendeschneidplatte weist zunächst den umlaufenden Schneidenrand 1 und eine Ausmuldung 2 auf. Der Schneidenrand 1 ist im Ausführungsbeispiel von einer nahezu kreisförmigen Linie begrenzt, welche eine umlaufende Schneidkante 3 bildet. In der Ausmuldung 2 sind nach Art eines Reliefs nebeneinander sechs trapezförmige Formkörper 4 vorgesehen. Die Formkörper 4 sind exakt gleich groß und stehen aus der Ausmuldung 2 empor. Die Formkörper 4 bilden infolge ihrer konstanten Teilung eine Indexierung für die Wendeschneidplatte im Plattensitz. Im Bereich des Schneidenrandes 1 können verschieden ausgestaltete Spanstufen oder Spanbrecher oder beispielsweise ein aufgeklebter oder aufgelöteter Kranz aus CBN- oder PKD-Schneidstoff als Zerpanungshilfe vorgesehen sein.

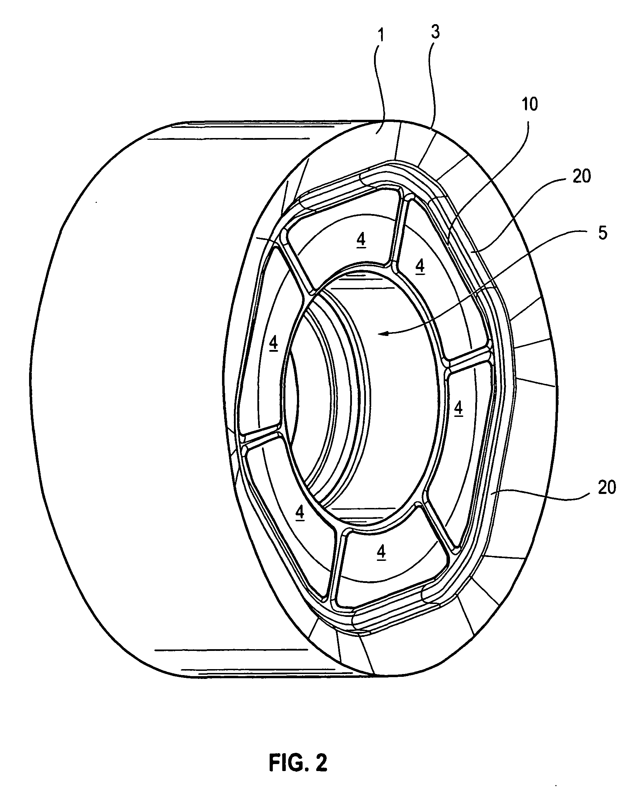

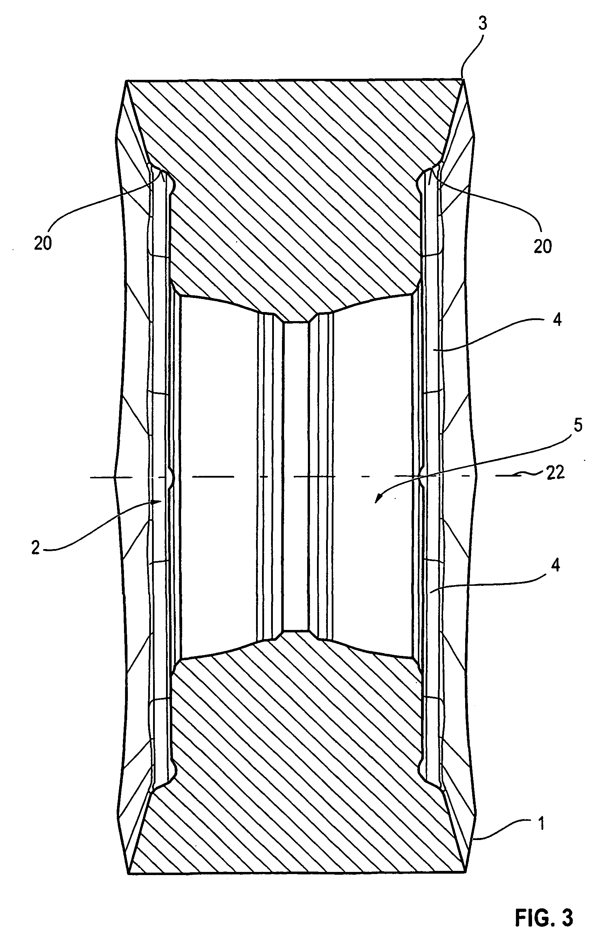

In Fig. 2 besonders gut erkennbar ist die den Grundkörper der Schneidplatte durchbrechende Durchgangsbohrung 5. Die Durchgangsbohrung 5 erstreckt sich konzentrisch zu ihrer in der Darstellung der Fig. 3 erkennbaren Mittellinie 22. Durch die Durchgangsbohrung 5 wird im Montageendzustand der Wendeschneidplatte ein vorzugsweise als Befestigungsschraube 6 ausgestalteter Befestigungsbolzen geschoben zum Fixieren der Wendeschneidplatte im Plattensitz. Die Befestigungsschraube 6 verläuft dann konzentrisch zur Mittelline 22 der Durchgangsbohrung 5. Die ebenen Oberflächen der Formkörper 4 sind beim Ausführungsbeispiel in einer Ebene angeordnet und erstrecken sich in einem Winkel von 90° zur Mittellinie 22 der Durchgangsbohrung 5.

Erkennbar ist im Ausführungsbeispiel - was jedoch nicht sein muss - die Wendeschneidplatte als zylindrischer Körper ausgestaltet. Die beiden Deckflächen des Zylinders sind hierbei als Arbeitsflächen ausgestaltet. Die auf der Auflagefläche 7 des Plattensitzes aufliegende Arbeitsfläche bildet die inaktive Positionierfläche 8 der Wendeschneidplatte. Dieser Positionierfläche 8 der Wendeschneidplatte ist die Bearbeitungsfläche 9 diametral abgewandt. Beim Schneidvorgang ist die Bearbeitungsfläche 9 mit dem Werkstück im Eingriff, während die Wendeschneidplatte mit der Positionierfläche 8 auf der Auflagefläche 7 des Werkzeugsitzes aufliegt.

Anhand der Fig. 1 sei die Anwendung der Formkörper 4 erläutert. In der Darstellung der Fig. 1 soll dies anhand des Formkörpers 4 in der "Zwei-Uhr-Stellung" einerseits und des diesem Formkörper 4 gegenüberliegenden Formkörpers 4 in der "Zehn-Uhr-Stellung" erläutert werden. Die Formkörper 4 sind etwa trapezförmig ausgestaltet mit einer als Anlageleiste 10 wirksamen langen Trapezseite. Die Anlageleiste 10 ist jeweils nur an den hier erläuterten Formkörpern 4 in der "Zwei-Uhr- bzw. Zehn-Uhr-Stellung" als Bezugsziffer eingezeichnet.

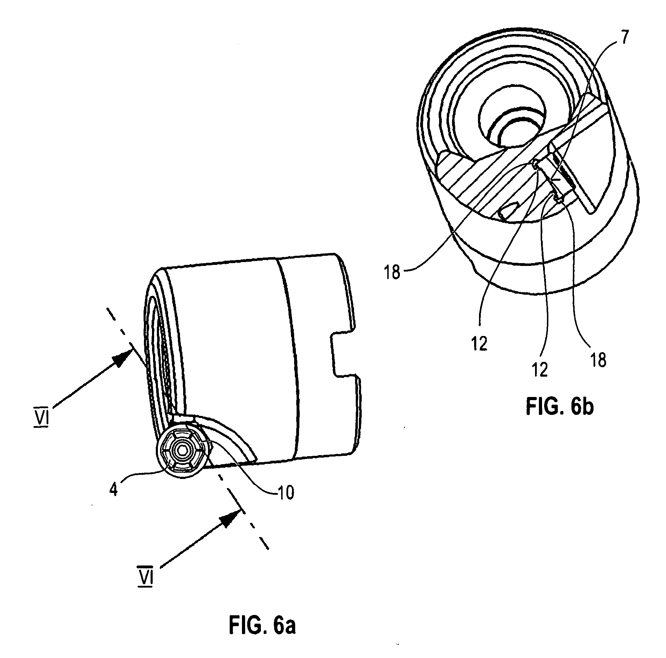

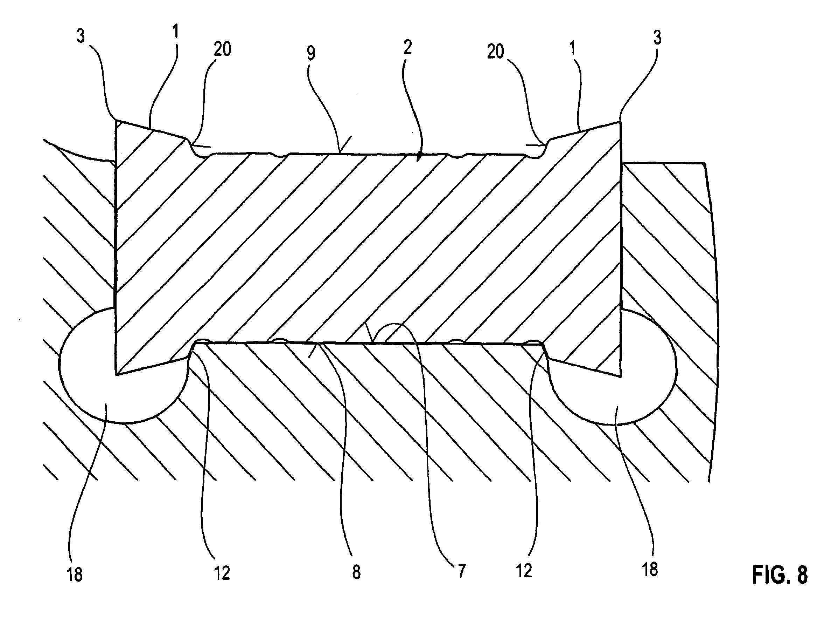

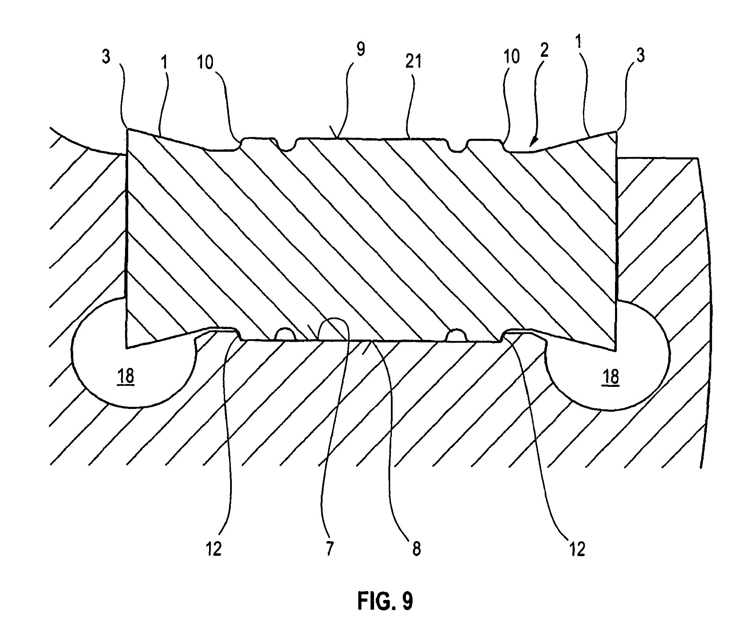

In Fig. 6a ist der Schnitt VI-VI durch die Anlageleiste 10 des Formkörpers 4 in der "Zwei-Uhr-Stellung" bzw. "Zehn-Uhr-Stellung" gezeigt. In Fig. 6b ist zunächst die Auflagefläche 7 am Plattensitz für die Wendeschneidplatte gezeigt. Die Auflagefläche 7 ist jeweils von Anschlagkanten 12 begrenzt. An diesen Anschlagkanten 12 im Plattensitz liegen entweder die Anlageleiste 10 (Fig. 9) oder die Anlageflächen 20 (Fig. 8) an und sichern somit die Wendeschneidplatte gegen ein Verdrehen und bilden zum anderen die Indexierung für die Wendeschneidplatte.

Zum Aktivieren des jeweils nächstfolgenden Teils der Schneidkante 3 wird die Anlagefläche 20 der des dem jeweils aktiven Formkörper 4 benachbarten Formkörpers 4 mit der Gegenanlagekante 12 in Eingriff gebracht. Auf diese Weise ist sichergestellt, dass der jeweils aktive Bereich der Schneidkante 3 stets dieselbe Relativstellung gegenüber dem Plattensitz und damit auch bei der Bearbeitung gegenüber dem Werkstück hat.

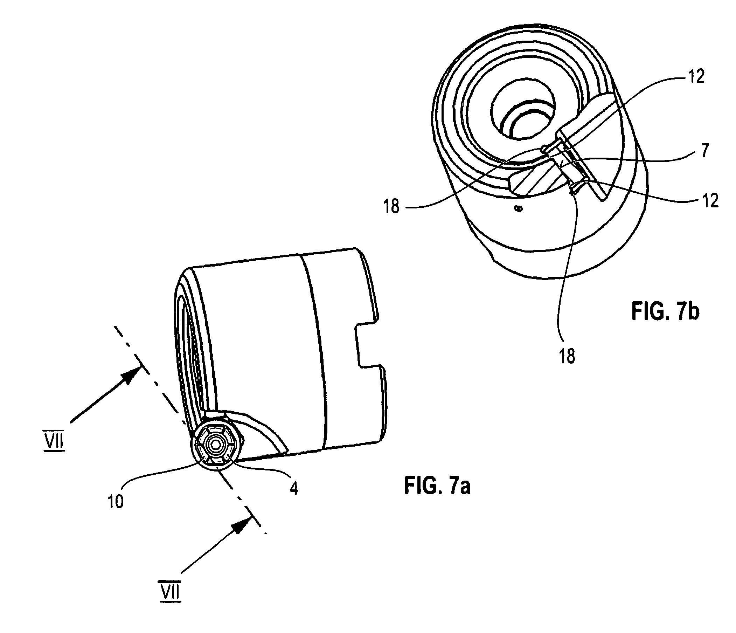

Bei dem in Fig. 6a bzw. Fig. 6b gezeigten Schnitt liegen die wirksamen Anschlagkanten 12 des Plattensitzes bezogen auf das Werkzeug sehr weit im Inneren des Plattensitzes. Fig. 7a bzw. Fig. 7b zeigen einen Schnitt mit Anschlagkanten 12, die bezogen auf den Korpus des Werkzeugs weit außen am Werkzeug angeordnet sind. Der Schnitt VII-VII verläuft durch die Anlageleiste 10 des Formkörpers 4 oder die Anlagefläche 20 der Wendeschneidplatte in der "Vier-Uhr-Stellung" bzw. "Acht-Uhr-Stellung". Wiederum weist der Plattensitz die Auflagefläche 7 mit den Anschlagkanten 12 auf. Entweder liegen an diesen Anschlagkanten 12 des Plattensitzes die Anlageleiste 10 (Fig. 9) oder die Anschlagflächen 20 (Fig. 8) an. Neben der Auflagefläche 7 ist am Plattensitz sowohl in Fig. 6b als auch in Fig. 7b eine Freischneidung 18 zur Aufnahme der Schneidkante 3 der Wendeschneidplatte erkennbar.

Die Bearbeitungsfläche 9 der Wendeschneidplatte ist gegnüber der Mittellängsachse 13 des Werkzeugs in bevorzugter Ausführung verkippt angeordnet. Der Axialwinkel 14 der Bearbeitungsfläche 9 gegenüber der Mittellängsachse 13 weist hierbei eine Größenordnung von 3° bis 10° auf. Besonders bevorzugt ist ein Kippwinkel 14 von 7°. Die Befestigungsschraube 6 weist zur Normalen 15 der Mittellängsachse 13 einen Einschraubwinkel 16 im Bereich von 0° bis 10°, vorzugsweise 8° auf.

Der Positionswinkel 17 des Plattensitzes bezogen auf die Mittellängsachse 13 liegt in einem Bereich von 10° bis 50°, vorzugsweise 30°.

Fig. 8 zeigt eine Schnittdarstellung eines ersten Ausführungsbeispiels einer im Plattensitz einliegenden erfindungsmäßigen Wendeschneidplatte. Die Positionierfläche 8 und die Bearbeitungsfläche 9 der in Fig. 8 dargestellten Wendeschneidplatte sind identisch ausgeführt, weshalb die für beide Flächen gültigen Bezugszeichen der besseren Lesbarkeit halber lediglich auf der Bearbeitungsfläche 9 eingetragen sind. Aus der Darstellung der Fig. 8 ist erkennbar, dass die Wendeschneidplatte mit ihrer Ausmuldung 2 den in Fig. 8 horizontal verlaufenden Bereich der Auflagefläche 7 vollständig überbrückt. Die Wendeschneidplatte liegt folglich mit ihren sich schräg vom Schneidenrand 1 in Richtung auf die Ausmuldung 2 verlaufenden Anlageflächen 20 an den in die Freischneidungen 18 auslaufenden Bereichen der Auflagefläche 7 an. Bei dieser in Fig. 8 gezeigten Ausführungsform ist der Schneidenrand vorzugsweise als Spanformstufe ausgestaltet.

Fig. 9 zeigt ein zweites Ausführungsbeispiel, bei der in der Ausmuldung 2 ein reliefartiger Vorsprung 21 vorgesehen ist. Der reliefartige Vorsprung 21 trägt an seinen schräg verlaufenden Seitenenden die Anlageleisten 10 der Wendeschneidplatte. Die Auflagefläche 7 im Plattensitz ist napfartig ausgestaltet, so dass der aus der Positionierfläche 8 emporstehende Vorsprung 21 in die napfartig ausgestaltete Auflagefläche 7 eingreifen kann. Die Anlageleisten 10 der Wendeschneidplatte liegen dann an den die Ränder der napfartigen Auflagefläche 7 bildenden Anschlagkanten 12 an.

Mit der erfindungsmäßigen Wendeschneidplatte sind mehrere Fixierungsvarianten im Plattensitz möglich. In einer ersten Variante (Fig. 8) überdeckt die Positionierfläche 8 der Wendeschneidplatte die gesamte Auflagefläche 7 des Plattensitzes, so dass die Wendeschneidplatte mit ihrer Anlagefläche 20 an den Anschlagkanten 12 des Plattensitzes anliegt. In einer zweiten Variante (Fig. 9) überdeckt die Positionierfläche 8 der Wendeschneidplatte die Auflagefläche 7 des Plattensitzes nur teilweise und die Anlageleiste 10 des Formkörpers 4 der Wendeschneidplatte liegt an der zugeordneten Anschlagkante 12 des Plattensitzes an. Diese beiden vorerwähnten Varianten können jeweils mit zwei verschiedenen Plattensitzvarianten kombiniert werden: Bei der ersten Plattensitzvariante (Fig. 6a/Fig. 6b) sind die Formkörper 4 (Fig. 9) oder die zugeordnete Anlagefläche 20 (Fig. 8) der Wendeschneidplatte zur Fixierung aktiv, die im Montageendzustand in der "Zwei-Uhr-Stellung" einerseits und in der "Zehn-Uhr-Stellung" andererseits angeordnet sind. Hierbei sind jeweils die Anschlagleisten 10 bzw. Anlageflächen 20 in der "Zwei-Uhr-Stellung" sowie zugleich in der "Zehn-Uhr-Stellung" aktiv. Dies ist die Ausführungsform mit weit innerhalb des Werkzeugkörpers wirksamer Wendeschneidplattenfixierung. Die zweite Plattensitzvariante betrifft eine bezogen auf den Werkzeugkörper weit außen angeordnete Fixierung der Wendeschneidplatte. Hier sind (Fig. 7a/Fig. 7b) die Formkörper 4 (Fig. 9) oder die zugeordnete Anlagefläche 20 (Fig. 8) der Wendeschneidplatte aktiv, die im Montageendzustand in der "Vier-Uhr-Stellung" und in der "Acht-Uhr-Stellung" angeordnet sind. Mit der erfindungsmäßigen Wendeschneidplatte lassen sich also vergleichsweise viele Wendeschneidplatten-Plattensitzkonfigurationen realisieren, so dass hinsichtlich der Anwendung ein hohes Maß an Flexibilität gewährleistet ist.

## Patentansprüche

1. Plattensitz umfassend eine Auflagefläche (7) und mit einer auf der Auflagefläche (7) aufliegenden Wendeschneidplatte, wobei die Wendeschneidplatte aufweist
- zwei einander abgewandte Arbeitsflächen und eine sich zwischen den Arbeitsflächen erstreckende Durchgangsbohrung (5) zur Aufnahme eines Befestigungsbolzens,
- jeweils einen umlaufenden Schneidenrand (1) mit einer Schneidkante (3) an jeder Arbeitsfläche,
- eine zentrale, vom Schneidenrand (1) kranzartig umsäumte Ausmuldung (2) mit einer der Anzahl der unterschiedlichen Schneidstellungen einer Arbeitsfläche entsprechenden Anzahl von segmentartigen Formkörpern (4) zur Positionierung der Wendeschneidplatte in der jeweiligen Schneidstellung, wobei
- die Formkörper (4) segmentartige Flächen bilden und in Form von segmentartigen Aussparungen oder segment- und reliefartigen Vorsprüngen ausgebildet sind und die ebenen Oberflächen der Formkörper (4) in einer Ebene liegen und sich diese Oberflächen in einem Winkel von 90° zur Mittellinie (22) der Durchgangsbohrung (5) erstrecken und Positionierflächen (8) ausbilden, die auf der Auflagefläche (7) des Plattensitzes aufliegen,
**dadurch gekennzeichnet**
**dass** zur Verdrehsicherung der Wendeschneidplatte zwischen dem Schneidenrand (1) und der Ausmuldung (2) eine Anlagefläche (20) ausgebildet ist oder die Formkörper (4) eine Anlageleiste (10) ausbilden, und dass der Plattensitz mindestens eine zu den Formkörpern (4) zumindest teilweise komplementär ausgebildete Formkörperaufnahme aufweist, nämlich eine Anschlagkante (12) am Plattensitz, an der die Anlagefläche (20) bzw. die Anlageleiste (10) der Wendeschneid platte anliegt.

2. Plattensitz mit Wendeschneidplatte nach Anspruch 1,
**gekennzeichnet durch**
eine trapezförmige Umrissgestalt der Formkörper (4).

3. Plattensitz mit Wendeschneidplatte nach Anspruch 1 oder 2,
**dadurch gekennzeichnet**
**dass** die Formkörper (4).identisch ausgebildet sind.

4. Plattensitz mit Wendeschneidplatte nach einem der Ansprüche 1 bis 3,
**gekennzeichnet durch**
eine Spanstufe am Schneidenrand (1).

5. Plattensitz mit Wendeschneidplatte nach einem der Ansprüche 1 bis 4,
**gekennzeichnet durch**
einen stoffschlüssig am Schneidenrand (1) fixierten Kranz aus einem CBN-Schneidstoff.

6. Plattensitz mit Wendeschneidplatte nach einem der Ansprüche 1 bis 4,
**gekennzeichnet durch**
einen stoffschlüssig am Schneidenrand (1) fixierten Kranz aus einem PKD-Schneidstoff.

7. Plattensitz mit Wendeschneidplatte nach einem der Ansprüche 1 bis 6,
**gekennzeichnet durch**
zwei unterschiedlich ausgearbeitete Arbeitsflächen zur Realisierung unterschiedlicher Schneidengeometrien auf beiden Wendeschneidplattenseiten.

8. Plattensitz mit Wendeschneidplatte nach einem der Ansprüche 1 bis 7,
**dadurch gekennzeichnet**
**dass** bei im Werkzeug gespannter Wendeschneidplatte eine Arbeitsfläche als Bearbeitungsfläche (9) aktiv ist und dass die der Bearbeitungsfläche (9) abgewandte Arbeitsfläche die Positionierfläche (8) zur Positionierung der Wendeschneidplatte im Plattensitz des Werkzeugs bildet.

9. Plattensitz mit Wendeschneidplatte nach einem der vorhergehenden Ansprüche,
**dadurch gekennzeichnet,**
**dass** der Plattensitz zwei einander gegenüberliegend als Formkörperaufnahmepaar angeordnete Anschlagkanten (12) aufweist.

10. Plattensitz mit Wendeschneidplatte nach einem der vorhergehenden Ansprüche,
**dadurch gekennzeichnet,**
**dass** der Plattensitz eine um die Auflagefläche (7) umlaufende Freischneidung als Aufnahmetasche für den Schneidenrand (1) der auf der Auflagefläche aufliegenden Positionierfläche (8) aufweist.

11. Zerspanungswerkzeug mit einem Plattensitz und einer Wendeschneidplatte nach einem der vorhergehenden Ansprüche.

## Claims

1. Insert seat comprising a supporting surface (7) and with an indexable cutting insert resting on the supporting surface (7), the indexable cutting insert having
- two working surfaces facing away from one another and a through-hole (5) extending between the working surfaces for accommodating a fastening bolt,
- in each case a circumferential lip rim (1) having a cutting edge (3) on each working surface,
- a central hollow (2) bordered in a ring-like manner by the lip rim (1) and having a number of segment-like molded bodies (4), corresponding to the number of the different cutting positions of a working surface, for positioning the indexable cutting insert in the respective cutting position,
- the molded bodies (4) forming segment-like surfaces and being designed in the form of segment-like recesses or segment-like and relief-like projections, and the flat surfaces of the molded bodies (4) lying in one plane, and these surfaces extending at an angle of 90° to the center line (22) of the through-hole (5) and forming positioning surfaces (8) which rest on the supporting surface (7) of the insert seat, **characterized**
**in that**, for rotational locking of the indexable cutting insert, a bearing surface (20) is formed between the lip rim (1) and the hollow (2) or the molded bodies (4) form a contact strip (10), and in that the insert seat has at least one molded body receptacle designed to be at least partially complementary to the molded bodies (4), specifically a stop edge (12) on the insert seat, against which stop edge the bearing surface (20) or the contact strip (10) of the indexable cutting insert bears.

2. Insert seat with indexable cutting insert according to Claim 1,
**characterized by**
a trapezoidal outline form of the molded bodies (4).

3. Insert seat with indexable cutting insert according to Claim 1 or 2,
**characterized in that**
the molded bodies (4) are of identical design.

4. Insert seat with indexable cutting insert according to one of Claims 1 to 3,
**characterized by**
a chip breaker at the lip rim (1).

5. Insert seat with indexable cutting insert according to one of Claims 1 to 4,
**characterized by**
a ring consisting of a CBN cutting material fixed to the lip rim (1) in an integral manner.

6. Insert seat with indexable cutting insert according to one of Claims 1 to 4,
**characterized by**
a ring consisting of a PCD cutting material fixed to the lip rim (1) in an integral manner.

7. Insert seat with indexable cutting insert according to one of Claims 1 to 6,
**characterized by**
two differently fashioned working surfaces for realizing different lip geometries on both indexable cutting insert sides.

8. Insert seat with indexable cutting insert according to one of Claims 1 to 7,
**characterized in that**
one working surface is active as machining surface (9) when the indexable cutting insert is clamped in the tool, and **in that** the working surface facing away from the machining surface (9) forms the positioning surface (8) for positioning the indexable cutting insert in the insert seat of the tool.

9. Insert seat with indexable cutting insert according to one of the preceding claims,
**characterized in that**
the insert seat has two stop edges (12) which are arranged opposite one another as a pair of molded body receptacles.

10. Insert seat with indexable cutting insert according to one of the preceding claims,
**characterized in that**
the insert seat has a clearance portion, encircling the supporting surface (7), as a receiving pocket for the lip rim (1) of the positioning surface (8) resting on the supporting surface.

11. Cutting tool having an insert seat and an indexable cutting insert according to one of the preceding claims.

## Revendications

1. Siège de plaquette comprenant une surface d'appui (7) et une plaquette de coupe tournante reposant sur la surface d'appui (7), la plaquette de coupe tournante comportant :
- deux surfaces de travail opposées l'une par rapport à l'autre et un alésage traversant (5) s'étendant entre les surfaces de travail pour recevoir un boulon de fixation ;
- un bord de coupe (1) périphérique respectivement pourvu d'une arête tranchante (3) au niveau de chaque surface de travail ;
- un renfoncement (2) central bordé à la façon d'une couronne par le bord de coupe (1) avec un nombre de corps de façonnage (4) de type segment correspondant au nombre de positions de coupe différentes d'une surface de travail en vue de réaliser le positionnement de la plaquette de coupe tournante dans la position de coupe respective ;
- les corps de façonnage (4) forment des surfaces de type segment et prennent la forme de niches de type segment ou de saillies de type segment et relief et les surfaces planes des corps de façonnage (4) reposent dans un plan et ces surfaces s'étendent selon un angle de 90° par rapport à la ligne médiane (22) de l'alésage traversant (5) et forment les surfaces de positionnement (8) reposant sur la surface d'appui (7) du siège de plaquette ;
**caractérisé en ce que** :
pour obtenir une sécurité antitorsion de la plaquette de coupe tournante, une surface de montage (20) est réalisée entre le bord de coupe (1) et le renfoncement (2) ou les corps de façonnage (4) forment une baguette de montage (10) et que le siège de plaquette comporte au moins un logement de corps de façonnage réalisé au moins en partie de façon complémentaire aux corps de façonnage (4), notamment une arête de butée (12) située au niveau du siège de plaquette reposant contre la surface de montage (20) et/ou la baguette de montage (10) de la plaquette de coupe tournante.

2. Siège de plaquette pourvu d'une plaquette de coupe tournante selon la revendication 1, **caractérisé par** la forme de trapèze du pourtour des corps de façonnage (4).

3. Siège de plaquette pourvu d'une plaquette de coupe tournante selon la revendication 1 ou 2, **caractérisé en ce que** les corps de façonnage (4) sont réalisés de façon identique.

4. Siège de plaquette pourvu d'une plaquette de coupe tournante selon l'une quelconque des revendications 1 à 3, **caractérisé par** la présence d'un niveau d'enlèvement des copeaux prévu au niveau du bord de coupe (1).

5. Siège de plaquette pourvu d'une plaquette de coupe tournante selon l'une quelconque des revendications 1 à 4, **caractérisé par** la présence d'une couronne en matière de coupe en CBN fixée par complémentarité de matières au bord de coupe (1).

6. Siège de plaquette pourvu d'une plaquette de coupe tournante selon l'une quelconque des revendications 1 à 4, **caractérisé par** la présence d'une couronne en matière de coupe en PKD fixée par complémentarité de matières au bord de coupe (1).

7. Siège de plaquette pourvu d'une plaquette de coupe tournante selon l'une quelconque des revendications 1 à 6, **caractérisé par** la présence de deux surfaces de travail réalisées de façon différente permettant de réaliser différentes formes géométriques de coupe sur les deux côtés de la plaquette de coupe tournante.

8. Siège de plaquette pourvu d'une plaquette de coupe tournante selon l'une quelconque des revendications 1 à 7, **caractérisé en ce qu'**une surface de travail servant de surface d'usinage (9) est active en présence d'une plaquette de coupe tournante serrée dans l'outil et que la surface de travail opposée à la surface d'usinage (9) forme la surface de positionnement (8) en vue de réaliser le positionnement de la plaquette de coupe tournante dans le siège de plaquette de l'outil.

9. Siège de plaquette pourvu d'une plaquette de coupe tournante selon l'une quelconque des revendications précédentes, **caractérisé en ce que** le siège de plaquette comporte deux arêtes de butée (12) disposées de façon opposée l'une par rapport à l'autre et servant de paire de logements de corps de façonnage.

10. Siège de plaquette pourvu d'une plaquette de coupe tournante selon l'une quelconque des revendications précédentes, **caractérisé en ce que** le siège de plaquette comporte un détouré entourant la surface d'appui (7) prenant la forme d'une poche de logement du bord de coupe (1) de la surface de positionnement (8) reposant sur la surface d'appui.

11. Outil d'usinage pourvu d'un siège de plaquette et d'une plaquette de coupe tournante selon l'une quelconque des revendications précédentes.
